# EUROPEAN PATENT APPLICATION

(11) **EP 1 519 074 A2**
(43) Date of publication of application: **30.03.2005**
(21) Application number: 04022527.8
(22) Date of filing: 22.09.2004
(51) Int. Cl.: F16F 15/129

(54) **Damping device and clutch apparatus having the same**

(30) Priority: 26.09.2003 JP 2003334940
(71) Applicant: Aisin Seiki Kabushiki Kaisha, Kariya-shi, Aichi-ken 448-8650 (JP)
(72) Inventor: Saeki, Tomohiro, Intellectual Property Department, Kariya-shi Aichi-ken 448-8650 (JP); Misu, Takahiro, Intellectual Property Department, Kariya-shi Aichi-ken 448-8650 (JP)
(74) Representative: Kramer Barske Schmidtchen

(57) **Abstract**

A damping device including a drive side rotational member (22) integrally rotated with an engine and a driven side rotational member (40 or 61) rotatably positioned to be substantially coaxial with the drive side rotational member (22) further includes a hysteresis torque generating mechanism (23,24 and 40) interposed between the drive side rotational member (22) and the driven side rotational member (40 or 61) and adapted to adjust a hysteresis torque by an oil pressure.

## Description

### FIELD OF THE INVENTION

This invention generally relates to a damping device and a clutch apparatus having the damping device, both of which are disposed between an input shaft at an engine side an and an output shaft at a transmission side and are capable of absorbing a torque fluctuation. More particularly, this invention pertains to a damping device and a clutch apparatus having the damping device, both of which are capable of setting noise and resonance appropriately.

### BACKGROUND

A conventional damping device is configured with main components such as a torsion spring mechanism, which absorbs a torque fluctuation and reduces a noise of a drive system, and a hysteresis mechanism, which is adjusted to prevent occurrence of resonance by restraining an operation thereof. A guide surface is defined at a drive side rotational member integrally rotated with an engine. The guide surface is oriented in the direction of a radially inner side of the drive side rotational member. A driven side rotational member is rotatably positioned at an inner diameter side of the guide surface so as to be substantially coaxial with the drive side rotational member. There is a circumferential directional space defined between a major diameter of the driven side rotational member and the guide surface. The drive side rotational member and the driven side rotational member are provided with torque transmitting portions, respectively, each of which passes through the defied space. There are plural coil springs housed in spaces between the both torque transmitting portions 31a in series. The respective coil springs are supported at both ends thereof by spring seats, which are slidably guided by the guide surface.

A type of the above described torque fluctuation absorbing apparatus have been disclosed in JP 2000-186744A2. This torque fluctuation absorbing apparatus is further provided with a hysteresis device, by which the maximum values of the respective spring loads of the coil springs, which are positioned at one end in a rotational direction, are set to be greater than a value necessary for transmitting the maximum driving torque of the engine. The hysteresis device is interposed between the drive side rotational member and the driven side rotational member and generates a given frictional resistance torque against the relative rotation therebetween.

However, in the torque fluctuation absorbing apparatus with the conventional damping device, the torsion spring mechanism and the hysteresis mechanism may interact each other, thereby reducing the effects respectively achieved. In this case, there may be a case that both of noise and resonance cannot be set at appropriate levels, respectively. Namely, the torsion spring mechanism may deteriorate a function of the hysteresis mechanism, while the hysteresis mechanism may deteriorate a function of the torsion spring mechanism.

For example, in a vehicle accelerating system having the conventional damping device and performing vehicle acceleration by a clutch, the hysteresis characteristics may easily fluctuate due to frictional heat. In this case, there may be a case that the vehicle acceleration is not appropriately controlled. In this type of vehicle accelerating system, cooling oil is required to be circulated by an oil pump in order to cool down a wet-type clutch. In this case, there may be a case that a fuel consumption becomes unfavorable, and further the vehicle acceleration is deteriorated.

A need exists for providing an improved damping device and a clutch apparatus having the damping device, both capable of setting noise and resonance at appropriate levels. Further, a need exists for providing an improved damping device and a clutch apparatus having the damping device, both capable of reducing fluctuation of clutch hysteresis characteristics. Still further, a need exists for providing an improved damping device and a clutch apparatus having the damping device and a wet-type clutch, both capable of improving effects on fuel consumption and the vehicle acceleration.

### SUMMARY OF THE INVENTION

According to an aspect of the present invention, a damping device including a drive side rotational member integrally rotated with an engine and a driven side rotational member rotatably positioned to be substantially coaxial with the drive side rotational member characterized in that the damping device further includes a hysteresis torque generating mechanism interposed between the drive side rotational member and the driven side rotational member and adapted to adjust a hysteresis torque by an oil pressure.

Therefore, even while an output shaft of a driving power source has been activated at a hyperslow speed, a noise or resonance can be controlled appropriately in favor of the hysteresis torque generating mechanism.

According to another aspect of the present invention, a clutch apparatus having a drive side rotational member integrally rotated with an engine, a driven side rotational member rotatably positioned to be substantially coaxial with the drive side rotational member, and at least one damper member positioned in a circumferential directional space between the drive side rotational member and the driven side rotational member and adjusted to absorb a torque fluctuation between the drive side rotational member and the driven side rotational member **characterized in that** the clutch apparatus further includes a first piston member interposed in an axial directional space between the drive side rotational member and the driven side rotational member and integrally rotated with the drive side rotational member in a freely slidable manner in an axial direction, the first piston member having a frictional material kept adjacent to the driven side rotational member or away therefrom, and a spring member interposed in an axial directional space between the drive side rotational member and the first piston member and biasing the first piston member towards the driven side rotational member.

It is preferable that the clutch apparatus further includes a hub member rotatably integral with the driven side rotational member at a radially inner side of the driven side rotational member and positioned freely rotatably and substantially coaxially relative to an output shaft, at least one clutch mechanism mechanically connected to the hub member, a first oil passage defined in the hub member and communicating with at least a first oil pressure chamber surrounded by the first piston member and the driven side rotational member, an oil pump for supplying an operating oil to the first oil pressure chamber via the first oil passage, an oil pressure adjusting valve for adjusting a pressure of the operating oil supplied to the first oil pressure chamber by the oil pump, and a controller for controlling the oil pressure adjusting valve based upon an engine rotational speed.

Therefore, fluctuation of hysteresis characteristics can be reduced. Further, when the clutch apparatus includes a wet-type clutch, fuel consumption and accelerating performance can be effectively improved.

### BRIEF DESCRIPTION OF THE DRAWINGS

The foregoing and additional features and characteristics of the present invention will become more apparent from the following detailed description considered with reference to the accompanying drawings, wherein:

Fig. 1 is a part sectional view illustrating a structure of a clutch apparatus according to embodiments of the present invention;

Fig. 2 is a block view for explaining an oil pressure circuit of the clutch apparatus according to the embodiments of the present invention;

Fig. 3 is a diagram for explaining a relationship between a rotational fluctuation ratio of the embodiments and an engine rotational speed thereof by comparing the relationship with one of a comparative example;

Fig. 4 is a first part cross sectional view schematically illustrating a structure of a drum member of the clutch apparatus according to the second embodiment of the present invention; and

Fig. 5 is a second part cross sectional view schematically illustrating a structure of the drum member of the clutch apparatus according to the second embodiment of the present invention.

### DETAILED DESCRIPTION

An embodiment of the present invention will be described hereinbelow in detail with reference to the accompanying drawings.

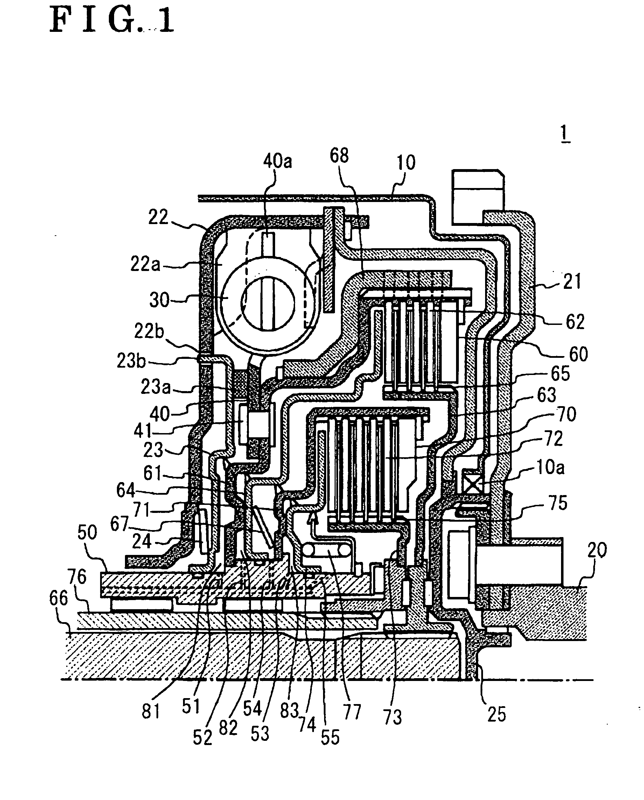

Fig. 1 illustrates a sectional view of a clutch apparatus 1 in a radial direction from a rotational shaft thereof according to the embodiment of the present invention. As illustrated in Fig. 1, the clutch apparatus 1 is a clutch portion of a twin clutch type transmission. The clutch apparatus 1 is configured with main components such as a clutch housing 10, an input shaft 20, a flywheel 21, a drum member 22, a piston member 23 (i.e., a first piston member, a hysteresis torque generating mechanism), a spring member 24 (i.e., the hysteresis torque generating mechanism), an output shaft engaging member 25, a damper member 30, an engagement plate 40 (i.e., the hysteresis torque generating mechanism), a hub member 50, a first clutch mechanism 60 and a second clutch mechanism 70. The twin clutch type transmission is provided with two clutches (the first and second clutch mechanisms 60 and 70 according to the embodiment of the present invention) connected with a transmission input shaft and a plurality of gear trains. Synchronizers select some of the plurality of gear trains and establish a connected condition between clutch output shafts and a transmission output shaft. More particularly, the synchronizers switch the gear grains for connecting the clutch output shaft and the transmission output shaft. The clutch (one of the first and second clutch mechanisms 60 and 70 according to the embodiment of the present invention), which is linked to the clutch output shaft being connected to the transmission output shaft, is frictionally engaged, while the other clutch (the other one of the first and second clutch mechanisms 60 and 70) is frictionally disengaged. As described above, a shift operation can be performed in the twin clutch type transmission.

The clutch housing 10 is axially joined to a transmission housing (not shown) at an outer peripheral side thereof and is provided with an oil sealing portion 10a at an inner peripheral side thereof. The oil sealing portion 10a is freely rotatably engaged at the input shaft 20.

The input shaft 20 integrally rotates with an engine (not shown) and is jointed with the flywheel 21 by a bolt. The flywheel 21 is connected to the drum member 22 and the output shaft engaging member 25 so as to integrally rotate with the input shaft 20, i.e., with the engine.

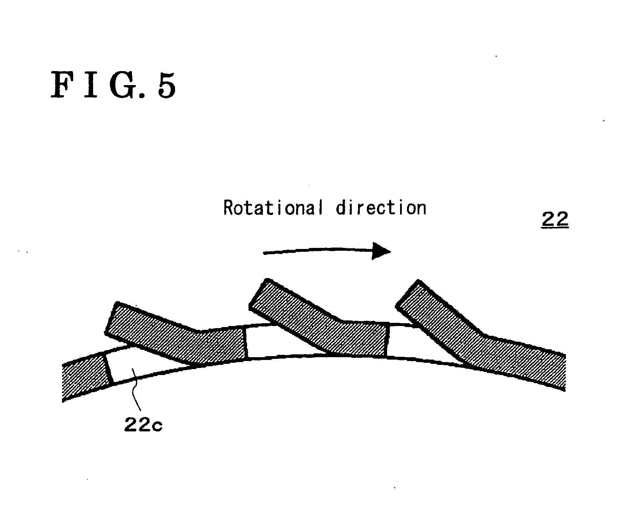

The drum member 22 is arranged at an outer periphery of the hub member 50 so as to surround the damper member 30, the first clutch mechanism 60 and the second clutch mechanism 70. The drum member 22 is integrally provided with a damper contact portion 22a at an inner peripheral side thereof, which can become in contact with one end of the damper member 30, and a recessed portion 22b that can be engaged with a projected portion 23b of the piston member 23. The projected portion 23b of the piston member 23 can freely slidably move in the recessed portion 22b. The drum member 22 can be further provided with an oil drain portion 22c (illustrated in Fig.5) for draining cooling oil. The drum member 22 corresponds to one of components configuring a drive side rotational member.

The piston member 23 is a damping characteristics controlling piston and is positioned in an axial directional space between the drum member 22 and a first clutch input drum 61 (The first clutch input drum 61 including the engagement plate 40). The piston member 23 is provided with the projected portion 23b engageable with the recessed portion 22b of the drum member 22, wherein the piston member 23 rotates integrally with the drum member 22 in a freely slidable manner in an approximately axial direction of the hub member 50. The piston member 23 is equipped with a frictional material 23a which is shifted between a frictionally engaged condition with the engagement plate 40 and a frictionally disengaged condition therewith.

The piston member 23 has been always biased towards frictional engagement elements by the spring member 24. There is a first oil pressure chamber 81 defined between the piston member 23 and the first clutch input drum 61, which is described later. Once operating oil is supplied to the first oil pressure chamber 81 through a first oil passage 51 of the hub member 50, the piston member 23 can be applied with a pushing force of the operating oil, which exceeds the biasing force of the spring member 24. At this point, the piston member 23 is moved to the left side in Fig. 1, thereby establishing the frictionally disengagement condition between the frictional member 23a and the engagement plate 40. Namely, when the piston member 23 has been pushed by the spring member 24, a hysteresis torque is generated at a frictional surface between the engagement plate 40 and the frictional member 23a by the spring member 24. The hysteresis torque then restrains the relative rotation between the drum member 22 and the engagement plate 40, i.e., the first clutch input drum 61, wherein the spring characteristics of the damper member 30 may not come into effect. On the other hand, when the piston member 23 is applied with the pushing force of the operating oil, the hysteresis torque is then reduced at the frictional surface between the frictional material 23a and the engagement plate 40, wherein the spring characteristics of the damper member 30 can easily come into effect. Further, the hysteresis torque can be fine adjusted by finely changing this pushing force subjected to the frictional material 23a.

The spring member 24 is disposed in the axial directional space between the drum member 22 and the piston member 23. According to the embodiment of the present invention, the spring member 24 is a disc spring biasing the piston member 23 towards the engagement plate 40. Alternatively, the spring member 24 does not have to be limited to the disc spring and can be any type of biasing means as far as the biasing means biases the piston member 23 towards the engagement plate 40. The output shaft engaging member 25 is engaged with one end of a second clutch output shaft 76 so that the second clutch output shaft 76 freely rotates.

The damper member 30 is arranged in a circumferential directional space between the drum member 22 and the engagement plate 40. According to the embodiment of the present invention, at least one damper member 30 is arranged in the aforementioned manner. The damper member 30 is a coil spring configured to absorb a torque fluctuation between the drum member 22 and the engagement plate 40, i.e., to absorb fluctuation between a torque at the input shaft side and a torque at the output shaft side. The one end of the damper member 30 comes in contact with the damper contact portion 22a of the drum member 22, while the other end thereof comes in contact with a damper contact portion 40a of the engagement plate 40.

The engagement plate 40 rotates integrally with the hub member 50, which is freely rotationally positioned to be substantially coaxial with a first clutch output shaft 66 and the second clutch output shaft 76. The engagement plate 40 is jointed to the first clutch input drum 61, which is welded to the hub member 50, by a rivet 41. As described above, the engagement plate 40 is provided with the damper contact portion 40a, which comes in contact with the damper member 30. The engagement plate 40 corresponds to one of components configuring a driven side rotational member.

The hub member 50 is positioned freely rotatably and substantially coaxially relative to the fist clutch output shaft 66 and the second clutch output shaft 76. The hub member 50 has been welded with an inner peripheral end of the first clutch input drum 61 and an inner peripheral end of a second clutch input drum 71. The hub member 50 includes at least following oil passages: the first oil passage 51 for supplying the operating oil to the first oil pressure chamber 81 surrounded with the first clutch input drum 61 (including the engagement plate 40) and the piston member 23, a first clutch oil passage 52 for supplying the operating oil to a first clutch piston oil pressure chamber 82 surrounded with the first clutch input drum 61 and a first clutch piston 64 (i.e., a second piston member), a second clutch oil passage 53 for supplying the operating oil to a second clutch piston oil pressure chamber 83 surrounded with the second clutch input drum 71 and a second clutch piston 74 (i.e., the second piston member), a fourth oil passage 54 for supplying an oil to a clearance between the first clutch piston 64 and the second clutch input drum 71, and a fifth oil passage 55 for supplying an oil to a clearance between the second clutch piston 74 and a second clutch output hub 73. The first oil passage 51, the first clutch oil passage 52, the second clutch oil passage 53, the fourth oil passage 54 and the fifth oil passage 55 are defined in the hub member 50 in a manner being independent from one another.

The first clutch mechanism 60 is configured with main components such as the first clutch input drum 61 welded with the hub member 50, a first clutch plate 62 spline-engaged with the first clutch input drum 61, a first clutch output hub 63 spline-engaged with the first clutch output shaft 66, and a first clutch disc 65 selectively engaged with the first clutch plate 62 by the first clutch piston 64. The first clutch disc 65 has been spline-engaged with the first clutch output hub 63. The first clutch output shaft 66 is positioned freely rotationally and substantially coaxially relative to the second clutch output shaft 76. An inertia body 68 possessing a predetermined mass is mounted at an outer peripheral side of the first clutch input drum 61 and rotates integrally with the first clutch input drum 61. According to the embodiment of the present invention, there is at least one oil drain portion (not illustrated) defined, which drains the cooling oil, at the first clutch input drum 61, the first clutch output hub 63 and the inertia body 68, respectively. The first clutch input drum 61 is one of the components configuring the driven side rotational member.

The first clutch piston 64 has been always biased by a first clutch spring 67 in a disengagement side, i.e., in the left side in Fig. 1. Once the operating oil is supplied to the first clutch piston oil pressure chamber 82 through the first clutch oil passage 52 of the hub member 50, the first clutch piston 64 can be subjected with the pushing force that exceeds the biasing force of the first clutch spring 67. The first clutch piston 64 hence moves in the right direction in Fig. 1, wherein the first clutch plate 62 is frictionally engaged with the first clutch disc 65.

The second clutch mechanism 70 is configured with main components such as the second clutch input drum 71 welded with the hub member 50, a second clutch plate 72 spline-engaged with the second clutch input drum 71, the second clutch output hub 73 spline-engaged with the second clutch output shaft 76, and a second clutch disc 75 selectively engaged with the second clutch plate 72 by the second clutch piston 74. The second clutch disc 75 has been spline-engaged with the second clutch output hub 73. According to the embodiment of the present invention, there is at least one oil drain portion (not illustrate) defined, which drains the cooling oil, at the second clutch input drum 71 and the second clutch output hub 73.

The second clutch piston 74 has been always biased by a second clutch spring 77 in the disengagement side, i.e., in the left side in Fig. 1. Once the operating oil is supplied to the second clutch piston oil pressure chamber 83 through the second clutch oil passage 53 of the hub member 50, the second clutch piston 74 can be subjected with the pushing force that exceeds the biasing force of the second clutch spring 77. The second clutch piston 74 hence moves in the right direction in Fig. 1, wherein the second clutch plate 72 is frictionally engaged with the first clutch disc 75.

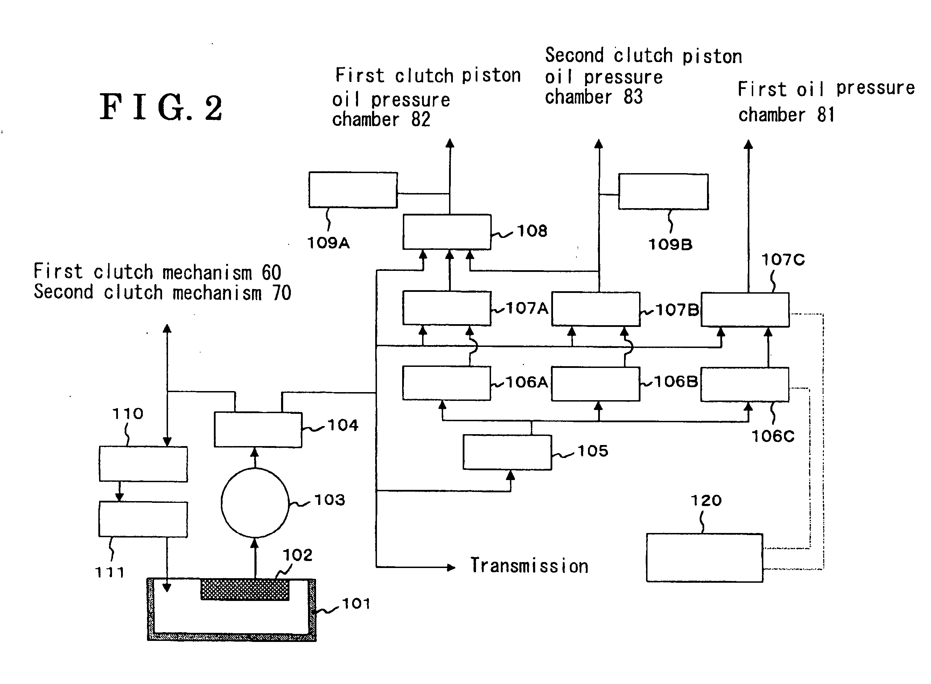

Next, following explanation will be given for explaining a pathway of the oil such as the operating oil, the cooling oil and so on, with reference to Figs. 1 and 2.

The oil pumped up by an oil pump 103 from an oil pan 102 through an oil strainer 102 is fed to a regulator valve 104. According to the embodiment of the present invention, the oil pump 103 is a pressure source for supplying oil to a cooling oil system and an operating oil system such as other clutch elements. Generally, the oil pump 103 is activated by the driving force from the engine. The oil is distributed by the regulator valve 104 at least to the transmission, the first clutch mechanism 60 (i.e., the clearance between the first clutch piston 64 and the second clutch input drum 71), the second clutch mechanism 70 (i.e., the clearance between the second clutch piston 74 and the second clutch output hub 73), the first clutch piston oil pressure chamber 82, the second clutch piston oil pressure chamber 83, the first oil pressure chamber 81 and a lubrication valve 110. More particularly, the cooling oil (e.g., lubricating oil) of the oil distributed by the regulator valve 104 is fed to the transmission and is also fed to the first clutch mechanism 60 and the second clutch mechanism 70, while the operating oil thereof is fed to at least one of the first clutch piston oil pressure chamber 82, the second clutch piston oil pressure chamber 83 and the first oil pressure chamber 81. The operating oil is applied with a pressure by an accumulator valve 109A and is fed to the first clutch piston oil pressure chamber 82 via a modulator valve 105, a solenoid valve 106A, a pressure control valve 107A, a fail-safe valve 108 and the first clutch oil passage 52. The operating oil is applied with a pressure by an accumulator valve 109B and is fed to the second clutch piston oil pressure chamber 83 via the modulator valve 105, a solenoid valve 106B, a pressure control valve 107B and the second clutch oil passage 53. The operating oil is fed to the first oil pressure chamber 81 via the modulator valve 105, the solenoid valve 106C, the pressure control valve 107C (i.e., oil pressure adjusting valve) and the first oil passage 51. The oil fed to the lubrication valve 110 returns to the oil pan 101 via an oil cooler 111. The oil supplied to the transmission, the first clutch mechanism 60, the second clutch mechanism 70, the first clutch piston oil pressure chamber 82, the second clutch piston oil pressure chamber 83 and the first oil pressure chamber 81 again returns to the oil pan 101. The oil returned to the oil pan 101 is circulated for reuse.

An oil pressure to be supplied to the first oil pressure chamber 81 is controlled by a controller 120 electrically connected to the solenoid valve 106C and the pressure control valve 107C, as illustrated in Fig. 2. The controller 120 is configured with a microcomputer and performs a signal processing in accordance with a program already memorized in a read only memory (ROM) while utilizing a temporarily memorizing function of a random access memory (RAM). The controller 120 is electrically connected to at least an input shaft rotational speed sensor (not illustrated) of the input shaft 20. Therefore, the operations of the solenoid valve 106C and the pressure control valve 107C are controlled in response to signals relevant to the input shaft rotational speed, respectively.

When the engine condition stays between an engine stationary condition and an engine idling condition, the controller 120 controls the operations of the solenoid valve 106C and the pressure control valve 107C so as to increase the hysteresis torque at the frictional surface between the frictional material 23a and the engagement plate 40. The hysteresis torque can be increased within an entire range between the engine stationary condition and an engine idling condition, or within a partial range therebetween. On the other hand, when the engine condition exceeds the engine idling condition, the controller 120 controls the operations of the solenoid valve 106C and the pressure control valve 107C so as to reduce the hysteresis torque at the frictional surface.

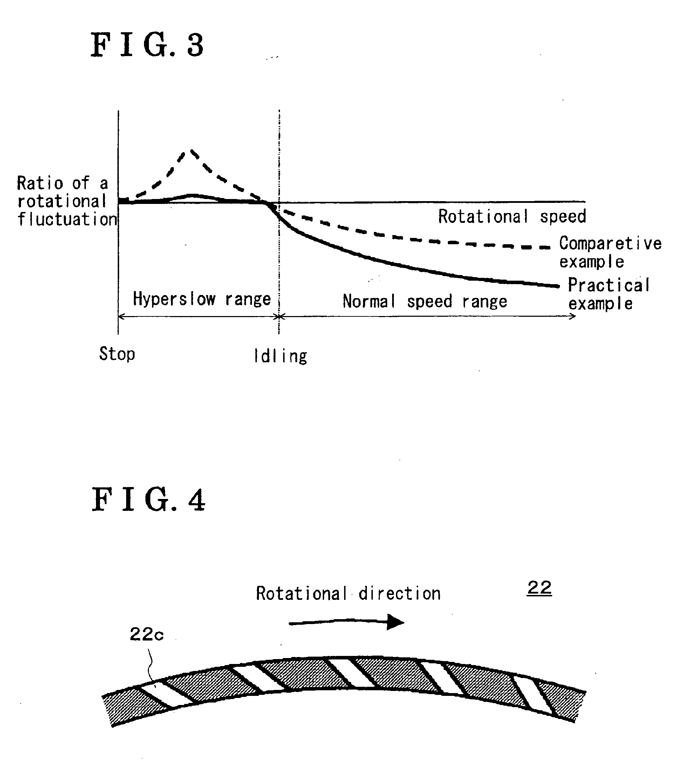

In a conventional clutch apparatus, in which a damping mechanism and a hysteresis mechanism are disposed between aa input shaft at the engine side and an output shaft at the transmission side, and a large inertia body is disposed at the transmission side, a ration of a rotational fluctuation reaches at a relatively high level within a hyperslow range, such as a range between the engine stationary condition and the engine idling condition. During the hyperslow range, the resonance may be easily caused between the engine and the transmission. Therefore, it is preferable that the hysteresis mechanism generates a relatively large hysteresis torque. However, during the hyperslow range, the oil pump, which is activated by the driving force from the engine, may be prevented from rotating or may rotate at a relatively low speed. In this case, the oil pump may not generate an oil pressure appropriately. In light of forgoing, according to the embodiment of the present invention, the hysteresis torque can be appropriately generated by the biasing force of the spring member 24. Therefore, the ratio of the rotational fluctuation can be effectively maintained at a relatively low level even while the oil pump has been stopped from rotation or has been rotated at a relatively low speed, as illustrated in Fig. 3.

On the other hand, during a normal speed range, such as a range beyond the engine idling condition, in this type of conventional clutch apparatus, it may be difficult to satisfy a requirement for reducing a transmission gear noise, but it may improve the restrain of the resonance, as illustrated in Fig. 3. During the normal speed range, it is preferable that the damping device possesses a quick response and the hysteresis torque is generated at a relatively small level. However, according to the conventional clutch apparatus, the hysteresis torque is generated at a relatively large level. Generally, during the normal speed range, the oil pump can generate an oil pressure at a relatively high level in favor of the engine driving force. In light of foregoing, according to the first embodiment of the present invention, the relatively high oil pressure generated by the oil pump is employed as a repulsive force relative to the biasing force of the spring member 24, thereby effectively enabling to reduce the hysteresis torque generated at the frictional surface between the frictional material 23a and the engagement plate 40. Further, the hysteresis torque can be fine adapted, i.e., the damping characteristics of the damper member 30 can be fine adjusted, by controlling the operations of the solenoid valve 106C and the pressure control valve 107C.

As described above, according to the embodiment of the present invention, the damping characteristics of the damper member 30 can be effectively controlled. Therefore, the noise and resonance can be set at appropriate levels, respectively. According to the embodiment of the present invention, the clutch apparatus 1 is integral with the damping device. However, the damping device itself can achieve the above-described effects.

Next, following explanation will be given for explaining a clutch apparatus according to a second embodiment of the present invention. The clutch apparatus according to the second embodiment is substantially the same as the clutch apparatus 1 according to the first embodiment. However,

The drum member 22 according to the second embodiment includes at least one oil draining portion 22c for draining the cooling oil. In view of the cross sectional view of the drum member 22, the drum member 22 is designed to suck a new cooling oil by keeping an inside of the drum member 22 at a negative pressure level when the oil is drained outwardly upon the rotation thereof. As one example, the drum member 22 can be provided with at least one hole 22c which penetrates from the radially inner side of the drum member 22 to the radially outer side thereof and inclines in an opposite direction to the rotational direction at the radially outer side thereof, as illustrated in Fig. 4. As the other example, the drum member 22 can be provided with at least one hole 22c which is defined by radially outwardly rolling up the radially outer portion of the drum member 22 from the opposite directional portion to the rotational direction towards the rotational direction, as illustrated in Fig. 5.

According to the second embodiment of the present invention, at least one of the first clutch input drum 61, the first clutch output hub 63, the inertia body 68, the second clutch input drum 71 and the second clutch output hub 73 can be provided with an oil draining portion substantially in the same manner as the oil draining portion 22c of the drum member 22. As illustrated in Fig. 1, the first clutch piston drum 61 has a surface area, which faces at the first oil pressure chamber 81 and the first clutch piston oil pressure chamber 82. At this surface area, it is necessary to generate the oil pressure. Therefore, this type of surface area does not have the oil draining portion.

As described above, according to the second embodiment of the present invention, the oil circulation will be improved, thereby enabling to reduce the fluctuation of the hysteresis torque characteristics at the clutch apparatus. Further, the load subjected to the oil pump can be effectively reduced, thereby enabling to reduce the influences on the fuel consumption and the accelerating performance at a wet-type clutch.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A damping device including a drive side rotational member (22) integrally rotated with an engine and a driven side rotational member (40 or 61) rotatably positioned to be substantially coaxial with the drive side rotational member (22) **characterized in that** the damping device further comprises a hysteresis torque generating mechanism (23, 24 and 40) interposed between the drive side rotational member (22) and the driven side rotational member (40 or 61) and adapted to adjust a hysteresis torque by an oil pressure.

2. A damping device according to claim 1, wherein the damping device further comprises:
at least one damper member (30) positioned in a circumferential directional space between the drive side rotational member (22) and the driven side rotational member (40 or 61) and adjusted to absorb a torque fluctuation between the drive side rotational member (22) and the driven side rotational member (40 or 61), and
damping characteristics controlling means for controlling damping characteristics by controlling the hysteresis torque at the hysteresis torque generating mechanism (23, 24 and 40).

3. A damping device according to claim 2, wherein the hysteresis torque generating mechanism (23, 24 and 40) includes:
a first piston member (23) interposed in an axial directional space between the drive side rotational member (22) and the driven side rotational member (40 or 61) and integrally rotated with the drive side rotational member (22) in a freely slidable manner in an axial direction, the first piston member (23) having a frictional material (23a) kept adjacent to the driven side rotational member (40 or 61) or away therefrom, and
a spring member (24) interposed in an axial directional space between the drive side rotational member (22) and the first piston member (23) and biasing the first piston member (23) towards the driven side rotational member (40 or 61),
wherein the damping characteristics controlling means controls the damping characteristics by moving the first piston member (23).

4. A damping device according to claims 2 or 3, wherein the damping characteristics controlling means controls the damping characteristics of the damper member (30) within an entire or partial range between an engine stationary condition and an engine idling condition.

5. A damping device according to claims 3 or 4, wherein the damping characteristics controlling means includes:
a hub member (50) rotatably integral with the driven side rotational member (40 or 61) at a radially inner side of the driven side rotational member (40 or 61) and positioned freely rotatably and substantially coaxially relative to an output shaft (66 and 76);
a first oil passage (51) defined in the hub member (50) and communicating with at least a first oil pressure chamber (81) surrounded by the first piston member (23) and the driven side rotational member (40 or 61);
an oil pump (103) for supplying an operating oil to the first oil pressure chamber (81) via the first oil passage (51);
an oil pressure adjusting valve (107C) for adjusting a pressure of the operating oil supplied to the first oil pressure chamber (81) by the oil pump (103); and
a controller (120) for controlling the oil pressure adjusting valve (107C) based upon an engine rotational speed.

6. A damping device according to claim 5, wherein the controller (120) controls the oil pressure adjusting valve (107C) for setting the oil pressure in the first oil pressure chamber (81) higher than the one during the range from the engine stationary condition to the engine idling condition when the engine starts rotating at a higher speed than the rotating speed during the range.

7. A damping device according to claim 5 or 6, wherein the oil pump (103) is a pressure source for a cooling oil system and an operating oil system for clutch elements.

8. A clutch apparatus having a drive side rotational member (22) integrally rotated with an engine, a driven side rotational member (40 or 61) rotatably positioned to be substantially coaxial with the drive side rotational member (40 or 61), and at least one damper member (30) positioned in a circumferential directional space between the drive side rotational member (22) and the driven side rotational member (40 or 61) and adjusted to absorb a torque fluctuation between the drive side rotational member (22) and the driven side rotational member (40 or 61) **characterized in that** the clutch apparatus further comprises:
a first piston member (23) interposed in an axial directional space between the drive side rotational member (22) and the driven side rotational member (40 or 61) and integrally rotated with the drive side rotational member (22) in a freely slidable manner in an axial direction, the first piston member (23) having a frictional material (23a) kept adjacent to the driven side rotational member (40 or 61) or away therefrom; and
a spring member (24) interposed in an axial directional space between the drive side rotational member (22) and the first piston member (23) and biasing the first piston member (23) towards the driven side rotational member (40 or 61).

9. A clutch apparatus according to claim 8, wherein the clutch apparatus further comprises:
a hub member (50) rotatably integral with the driven side rotational member (40 or 61) at a radially inner side of the driven side rotational member (40 or 61) and positioned freely rotatably and substantially coaxially relative to an output shaft (66 and 76);
at least one clutch mechanism .(60 or 70) mechanically connected to the hub member (50);
a first oil passage (51) defined in the hub member (50) and communicating with at least a first oil pressure chamber (81) surrounded by the first piston member (23) and the driven side rotational member (40 or 61);
an oil pump (103) for supplying an operating oil to the first oil pressure chamber (81) via the first oil passage (51);
an oil pressure adjusting valve (107C) for adjusting a pressure of the operating oil supplied to the first oil pressure chamber (81) by the oil pump (103); and
a controller (120) for controlling the oil pressure adjusting valve (107C) based upon an engine rotational speed.

10. A clutch apparatus according to claim 9, wherein the clutch apparatus still further comprises:
at least one second piston member (64 or 74) adjusted to establish a frictionally engaged condition or a frictionally disengaged condition at the at least one clutch mechanism (60 or 70); and
at least one second oil passage (52 or 53) defined in the hub member (50) and communicating with at least one second pressure chamber (82 or 83) for operating the at least one second piston member (64 or 74),
wherein the oil pump (103) supplies the operating oil to the at least one second pressure chamber (82 or 83) via the at least one second oil passage (52 or 53).

11. A clutch apparatus according to claim 9 or 10, wherein the at least one clutch mechanism (60 or 70) includes at least one rotatable component having at least one oil draining portion (22c) for draining a cooling oil.

12. A clutch apparatus according to claim 11, wherein the at least one oil draining portion (22c) is designed to suck a cooling oil by keeping an inside of the at least one rotatable component at a negative pressure level when an oil is drained in a radially outward direction upon rotation of the at least one rotatable component.

13. A clutch apparatus according to claim 12, wherein the at least one oil draining portion (22c) is a hole extending from a radially inner side of the at least one rotatable component to a radially outer side thereof and inclining in an opposite direction to a rotational direction.

14. A clutch apparatus according to claim 12, wherein the at least one oil draining portion (22c) is a hole defined by radially outwardly rolling up a radially outer portion of the at least one rotational component from an opposite directional portion to a rotational direction in the rotational direction.
